# EUROPEAN PATENT APPLICATION

(11) **EP 4 243 187 A1**
(43) Date of publication of application: **13.09.2023**
(21) Application number: 22829536.6
(22) Date of filing: 14.10.2022
(51) Int. Cl.: H01M 50/503

(54) **BATTERY CONNECTOR, BATTERY MODULE AND BATTERY PACK**

(30) Priority: 25.01.2022 CN 202220207047 U
(71) Applicant: Eve Power Co., Ltd., Jingmen, Hubei 448000 (CN)
(72) Inventor: ZHANG, Guojiang, Jingmen, Hubei 448000 (CN) (CN)
(74) Representative: De Arpe Tejero, Manuel
(86) International application number: PCT/CN2022/125240
(87) International publication number: WO 2023/142536

(57) **Abstract**

A battery connector, a battery module, and a battery pack are provided. The battery connector includes multiple conductive units; wherein each conductive unit includes a positive connection region, a negative connection region, and a first buffer section arranged between the positive connection region and the negative connection region; the positive connection region is configured to connect a positive electrode of a cell, and the negative connection region is configured to connect a negative electrode of another cell; adjacent two of the plurality of conductive units are electrically connected to each other by a connecting member. The above design can realize the series and parallel connection of cells, which can have a certain buffering effect on the expansion force, tolerance, and displacement between the cells, avoid the battery connector from breaking, improve the reliability of the operation of the battery connector, and ensure the reliability of the connection between the cells and the battery connector.

## Description

The present application claims priority of Chinese Patent Application No. 202220207047.5, filed on January 25, 2022, in the China National Intellectual Property Administration, the entire contents of which are hereby incorporated by reference in their entireties.

### TECHNICAL FIELD

The present disclosure relates to the field of battery technologies, and in particular to a battery connector, a battery module, and a battery pack.

### BACKGROUND

A battery module is usually composed of multiple cells connected in series and parallel. The way the cells are connected in series and parallel is not only related to the assembly efficiency of the battery module, but also has an impact on the main technical performance, service life, and safety of the battery module.

At present, the series and parallel connection between cells is usually done by welding the positive and negative electrodes of the cells in the parallel battery module together with metal strips. However, during the use of the battery module, the cells will be shaken, resulting in the metal strips connecting the cells being subjected to tension or pressure, which will lead to wrinkling or even fracture of the metal strips in long-term use, and the fracture of the metal strips will lead to the circuit being cut off, affecting the normal operation of the battery module.

### SUMMARY OF THE DISCLOSURE

According to the present disclosure, a battery connector is provided, enabling series and parallel connection of cells in a battery module and reduces the risk of battery connection piece breakage.

In a first aspect, the present disclosure provides a battery connector including a plurality of conductive units;

wherein each conductive unit includes a positive connection region, a negative connection region, and a first buffer section arranged between the positive connection region and the negative connection region; the positive connection region is configured to connect a positive electrode of a cell, and the negative connection region is configured to connect a negative electrode of another cell; adjacent two of the plurality of conductive units are electrically connected to each other by a connecting member.

In a second aspect, the present disclosure provides a battery module, including a plurality of cells and a plurality of battery connectors as above; wherein the positive connection region is configured to connect a positive electrode of the cell, and the negative connection region is configured to connect a negative electrode of the cell.

In a third aspect, the present disclosure provides a battery pack, including the above battery module.

### BRIEF DESCRIPTION OF THE DRAWINGS

FIG. 1 is a structural schematic view of a battery connector according to an embodiment of the present disclosure.
FIG. 2 is another structural schematic view of a battery connector according to an embodiment of the present disclosure.
FIG. 3 is an enlarged schematic view of region A in FIG. 1.

### Reference numerals:

100, conductive unit; 110, positive connection region; 120, negative connection region; 121, circular arc-shaped notch; 130, first buffer section; 131, top wall; 132, side wall; 200, connecting member; 210, second buffer section.

### DETAILED DESCRIPTION

In the description of the present disclosure, unless otherwise specified and limited, the terms "coupled", "connected", "fixed" are to be understood in a broad sense, for example, as a fixed connection, as a removable connection, or as a one-piece unit; as a mechanical connection or as an electrical connection; as a direct connection or as an indirect connection through an intermediate medium; as an internal connection of two components or an interaction of two components. To those skilled in the art, the meaning of the above terms in the context of the present disclosure may be understood in accordance with the circumstances.

In the present disclosure, unless otherwise expressly specified and limited, a first feature "on" or "under" a second feature may include direct contact between the first and second features, or it may include contact between the first and second features not directly, but through a separate feature between them. Also, the first feature being "above", "on" and "on top of" the second feature includes the first feature being directly above and diagonally above the second feature, or simply indicating that the first feature is horizontally higher than the second feature. The first feature being "below", "under" and "on bottom of" the second feature includes the first feature being directly below and diagonally below the second feature, or simply indicating that the first feature is horizontally lower than the second feature.

In the description herein, the terms "up", "down", "left", "right", and other orientation or positional relationships are based on the orientation or positional relationships shown in the accompanying drawings and are intended only to facilitate description and simplify operation, not to indicate or imply that the device or element referred to must have a particular orientation, be constructed and operate in a particular orientation, and therefore are not to be construed as limiting the present disclosure. In addition, the terms "first" and "second" are used only for descriptive distinction and have no special meaning.

The present disclosure provides a battery connector that enables series and parallel connection of cells, moderates shocks, reduces the risk of battery connector breakage, and improves the reliability of the operation of the battery connector.

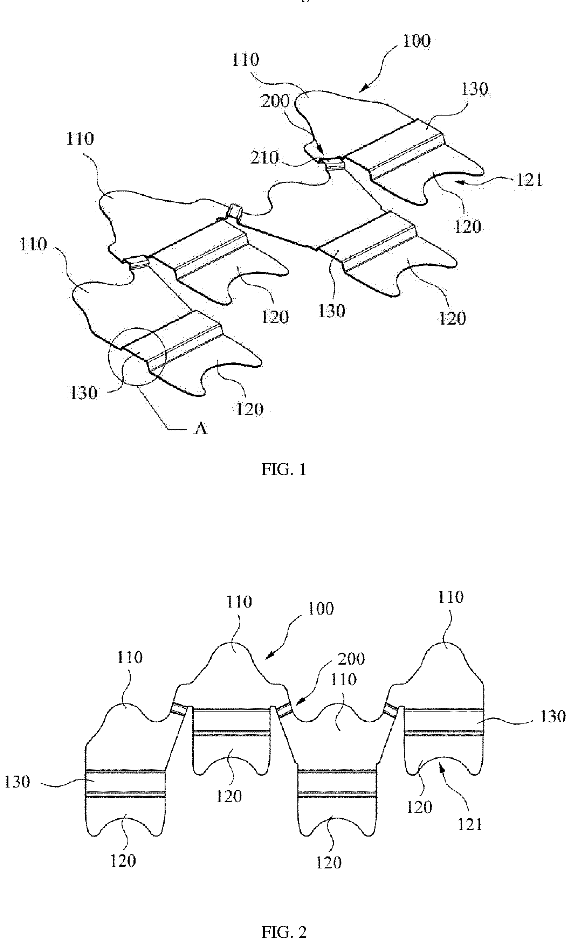

For example, as shown in FIGS. 1 and 2, the battery connector includes multiple conductive units 100. Each conductive unit 100 includes a positive connection region 110, a negative connection region 120, and a first buffer section 130. The positive connection region 110 is configured to connect a positive electrode of a cell, and the negative connection region 120 is configured to connect a negative electrode of another cell adjacent to the cell. The first buffer section 130 is arranged between the positive connection region 110 and the negative connection region 120 for cushioning a tolerance between the positive electrode and the negative electrode. Adjacent conductive units 100 are electrically connected to each other by a connecting member 200.

By arranging the positive connection region 110 and the negative connection region 120 on the conductive unit 100, and electrically connecting the positive connection region 110 to the positive electrode of a cell and the negative connection region 120 to the negative electrode of another cell, series connection between the cells may be realized. In addition, parallel connection between cells may be realized by arranging the connecting member 200 to electrically connect the adjacent conductive units 100 to each other. Arranging the first buffer section 130 between the positive connection region 110 and the negative connection region 120 may have a certain buffering effect on the expansion force, tolerance, and displacement between cells to avoid the battery connector from breaking and improve the reliability of the operation of the battery connector; in addition, it may ensure the reliability of the connection between cells and the battery connector.

For example, a second buffer section 210 may be arranged on the connecting member 200. On the one hand, the second buffer section 210 may have a certain buffering effect on the expansion force, tolerance, and displacement between adjacent cells, thereby avoiding the battery connector from breaking and improving the reliability of the work of the battery connector; on the other hand, it may ensure the reliability of the connection between the cells and the battery connector.

In some embodiments, the positive connection region 110 may be electrically connected to the positive electrode of the cell by welding, and the negative connection region 120 may be connected to the negative electrode of the other cell by welding. The first buffer section 130 and the second buffer section 210 can play a buffering role when the positive connection region 110 and the negative connection region 120 of the same conductive unit 100 are welded to two adjacent cells, thereby avoiding false welding between the positive connection region 110 and the positive electrode of the cell and between the negative connection region 120 and the negative terminal of the other cell, improving the connection strength between the battery connector and the cells, and further improving the reliability of the battery connector. In other embodiments, the positive connection region 110 and the negative connection region 120 may be raised upward or raised downward, and the connections between the positive connection region 110 and the positive electrode of the cell and between the negative connection region 120 and the negative electrode of the other cell may be connected in other ways, which can be set according to actual needs.

In some embodiments, the first buffer section 130 may be arranged as a raised structure, for example, the first buffer section 130 is provided with a " 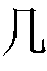 "-shaped structure. As the battery module in the process of use, multiple cells may have a slight relative shaking, and the positive and negative electrodes of the cells are electrically connected by welding in the conductive units 100, with the relative shaking of the cells, will stretch or compress the battery connector. With the usage duration becomes longer, the battery connector will be fatigued and cracked, and then disconnected. The " 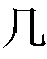 "-shaped structure can provide a relative shaking space for the battery connector when the cells are shaking, reducing the risk of battery connector breakage. In other embodiments, the first buffer section 130 may be a Z-shaped structure. In other embodiments, the first buffer section 130 may be wavy, depending on the actual needs.

In some embodiments, the second buffer section 210 may also be a raised structure, for example, a " 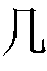 "-shaped structure. When the cells are connected in parallel, the relative displacement between the conductive units 100 is caused by the shaking of the cells in adjacent rows, and the connecting member 200 will break due to fatigue as the usage duration becomes longer. Arranging the second buffer section 210 into the " 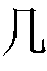 "-shaped structure may provide a space for the relative deformation of the connecting member 200, so as to moderate the tension or pressure caused by the relative displacement between the conductive units 100, reduce the risk of the connecting member 200 breaking, avoid the current disconnection due to the connecting member 200 breaking, and improve the reliability of the operation of the battery module. In other embodiments, the second buffer segment 210 may be a Z-shaped structure. In other embodiments, the second buffer section 210 may be wavy, depending on the actual needs.

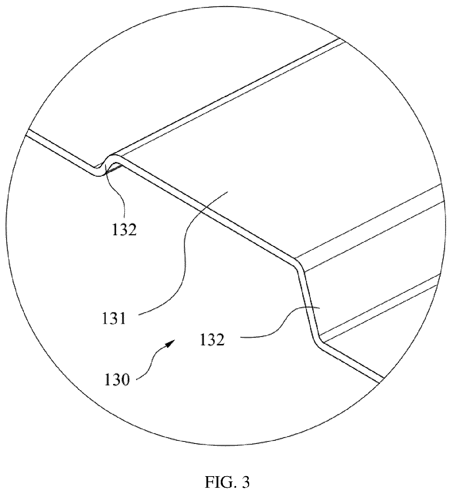

For example, as shown in FIG. 3, the first buffer section 130 may be a convex slot, and a top wall 131 and a side wall 132 of the convex slot is set at an included angle, for example, the angle between the top wall 131 and the side wall 132 may be greater than 90°, or less than 90°, or equal to 90°, as needed. When there is shaking between adjacent cells, the convex slot structure can increase the space for cell shaking through its own deformation, thereby avoiding the conductive unit 100 from breaking due to long-term stretching or compression. The angle between the top wall 131 and the side wall 132 of the convex slot being greater than or equal to 90°is conducive to the deformation of the conductive unit 100. Of course, the second buffer section 210 may also be a convex slot, and a top wall 131 and a side wall 132 of the convex slot is set at an included angle. For example, the angle between the top wall 131 and the side wall 132 may be greater than 90°, or less than 90°, or equal to 90°, which is conducive to the deformation of the connecting member 200 and avoids the fatigue fracture of the connecting member 200 due to the shaking of the cells.

In some embodiments, the cells in adjacent rows are arranged staggered with each other. Accordingly, adjacent conductive units 100 may be staggered such that three consecutive conductive units 100 are in a " 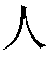 "-shaped structure or V-shaped structure. The number of the conductive units 100 may be set according to the number of cells in the battery module. This setup may save the assembly space of the battery module, make the battery module more compact, and reduce the assembly cost.

In other embodiments, the cells in adjacent rows are arranged facing each other, and the conductive units 100 may be arranged in parallel to each other to adapt to the arrangement of the cells. The number of the conductive units 100 may be set according to the number of cells in the battery module.

For example, the battery connector may be formed in one piece by stamping, and the stamping process is simple and suitable for mass production.

In some embodiments, the positive electrode of the cell is a cylindrical projection located in the middle, and the negative electrode is around the projection. Therefore, a circular arc-shaped notch 121 matching the positive electrode post of the cell may be defined on the negative connection region 120. This structure can increase the connection area between the negative connection region 120 and the negative electrode of the cell, improve the reliability of the connection between the negative connection region 120 and the negative electrode of the cell, and thus improve the reliability of the operation of the battery connector.

For example, an inwardly concave circular arc-shaped structure may be arranged on the connecting member 200, such that a narrow portion exists on the connector 200. When there is an extreme situation such as a short circuit in the circuit, the narrow portion will fuse due to the concentration of thermal stress, which will cut off the current in the circuit and prevent the conductive cell 100 electrically connected to the connecting member 200 from receiving a large current, thereby protecting the cells electrically connected to the conductive cell 100 and avoiding damage to the cells, further reducing losses and improving the safety performance of the battery module.

In the present disclosure, by arranging the positive connection region 110 and the negative connection region 120 on the conductive unit 100, and electrically connecting the positive connection region 110 to the positive electrode of a cell and the negative connection region 120 to the negative electrode of another cell, series connection between the cells may be realized. In addition, parallel connection between cells may be realized by arranging the connecting member 200 to electrically connect the adjacent conductive units 100 to each other. Arranging the first buffer section 130 between the positive connection region 110 and the negative connection region 120 and arranging the second buffer section 210 on the connecting member 200 may have a certain buffering effect on the expansion force, tolerance, and displacement between cells to avoid the battery connector from breaking and improve the reliability of the operation of the battery connector; in addition, it may ensure the reliability of the connection between cells and the battery connector. By arranging an inwardly concave circular arc-shaped structure on the connecting member 200, a narrow portion exists on the connector 200. When there is an extreme situation such as a short circuit in the circuit, the narrow portion will fuse due to the concentration of thermal stress, which will cut off the current in the circuit, thereby protecting the cells and providing safety performance of the battery module.

Embodiments of the present disclosure further provide a battery module, including multiple cells and multiple battery connectors as above. The positive connection region 110 is electrically connected to the positive electrode of a cell and the negative connection region 120 is electrically connected to the negative electrode of another cell, and the series and parallel connection of the cells in the battery module is realized by the above-mentioned battery connectors.

For ease of understanding, a brief description of how the above-mentioned battery connector is assembled with cells is given.

In the embodiments, assuming that 6 rows of cells are set up, each row has 4 cells, and a battery connector as shown in FIG. 1 is used between two adjacent rows of cells for series and parallel connection. The battery module is adopted with a total of 3 battery connectors, and the installation direction of the 3 battery connectors is the same. In this case, the battery module has all positive poles exposed at one end and all negative poles exposed at the other end, and all the positive poles are welded together as the positive electrode of the battery pack through a first copper row, and all the negative poles are welded together as the negative electrode of the battery pack through a second copper row.

The present disclosure further provides a battery pack including the above-mentioned battery module.

In the present disclosure, by arranging the positive connection region and the negative connection region on the conductive unit, and electrically connecting the positive connection region to the positive electrode of a cell and the negative connection region to the negative electrode of another cell, series connection between the cells may be realized. In addition, parallel connection between cells may be realized by arranging the connecting member to electrically connect the adjacent conductive units to each other, thereby realizing series and parallel connection between cells through the above battery connectors. Arranging the first buffer section between the positive connection region and the negative connection region and arranging the second buffer section on the connecting member may absorb the tolerance generated by the cells during the stacking process and the cells themselves, avoid the phenomenon of false welding when the above battery connectors are connected to the cells, and improve the reliability of the connection between the battery connectors and the cells; in addition, the above arrangement may moderate the impact caused by the shaking of the cells, reduce the risk of the battery connectors breaking, and improve the reliability of the operation of the battery connectors.

## Claims

1. A battery connector, comprising a plurality of conductive units (100);
wherein each conductive unit (100) comprises a positive connection region (110), a negative connection region (120), and a first buffer section (130) arranged between the positive connection region (110) and the negative connection region (120); the positive connection region (110) is configured to connect a positive electrode of a cell, and the negative connection region (120) is configured to connect a negative electrode of the cell; adjacent two of the plurality of conductive units (100) are electrically connected to each other by a connecting member (200).

2. The battery connector according to claim 1, wherein a second buffer section (210) is arranged on the connecting member (200).

3. The battery connector according to claim 2, wherein at least one of the first buffer section (130) and the second buffer section (210) is a raised structure.

4. The battery connector according to claim 2, wherein at least one of the first buffer section (130) and the second buffer section (210) is a Z-shaped structure.

5. The battery connector according to claim 2, wherein at least one of the first buffer section (130) and the second buffer section (210) is wavy in shape.

6. The battery connector according to claim 2, wherein at least one of the first buffer section (130) and the second buffer section (210) is a convex slot, and a top wall and a side wall of the convex slot is set at an included angle.

7. The battery connector according to any one of claims 1-6, wherein the plurality of conductive units (100) are staggered, and consecutive three of the plurality of conductive units (100) are in a " 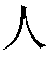 "-shaped structure or V-shaped structure.

8. The battery connector according to any one of claims 1-6, wherein the plurality of conductive units (100) are in parallel to each other.

9. The battery connector according to claim 1, wherein a circular arc-shaped notch (121) matching the positive electrode post of the cell is defined on the negative connection region (120).

10. The battery connector according to claim 1, wherein an inwardly concave circular arc-shaped structure is arranged on the connecting member (200).

11. The battery connector according to claim 1, formed in one piece by stamping.

12. A battery module, comprising a plurality of cells and a plurality of battery connectors according to any one of claims 1-11; wherein the positive connection region (110) is configured to connect a positive electrode of the cell, and the negative connection region (120) is configured to connect a negative electrode of the cell. 13. A battery pack, comprising the battery module according to claim 12.
